# EUROPEAN PATENT APPLICATION

(11) **EP 4 510 682 A1**
(43) Date of publication of application: **19.02.2025**
(21) Application number: 22936960.8
(22) Date of filing: 15.04.2022
(51) Int. Cl.: H04W 24/08, H04W 24/10

(54) **SENSING MEASUREMENT METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/087172
(87) International publication number: WO 2023/197315

(57) **Abstract**

The present disclosure provides a sensing measurement method and a communication apparatus. The sensing measurement method comprises: determining a first message frame (210), wherein the first message frame comprises a station information domain, which comprises a first sub-domain, the first sub-domain being used for identifying an uplink modulation and coding scheme (UL MCS) used by a station device to feed back a second message frame, which station device has received the first message frame; and sending the first message frame (220).

## Description

### TECHNICAL FIELD

The present disclosure relates to the field of wireless communications and, more specifically, to a sensing measurement method and a communication apparatus.

### BACKGROUND

The wireless local area network (WLAN) has the characteristics of flexibility, mobility, and low cost, etc. With the development of communication technologies and the growth of user requirements, researches on the application of the WLAN are being gradually deepened. For example, WLAN sensing is currently researched, and the main application scenarios of the WLAN sensing are location discovery in dense environments (home and enterprise environments), proximity detection, and presence detection, etc.

### SUMMARY

Various embodiments of the present disclosure provide technical solutions as follows.

According to an exemplary embodiment of the present disclosure, there is provided a sensing measurement method. The sensing measurement method may be applied to an access point device, and may include: determining a first message frame, where the first message frame includes a station information field, the station information field includes a first sub-field, and the first sub-field is used for indicating an uplink modulation and coding scheme (UL MCS) used by a station device, in feeding back a second message frame, that receives the first message frame; and sending the first message frame.

According to an exemplary embodiment of the present disclosure, there is provided a sensing measurement method. The sensing measurement method may be applied to a station device, and may include: receiving a first message frame, where the first message frame includes a station information field, the station information field includes a first sub-field, and the first sub-field is used for indicating a UL MCS used by a station device, in feeding back a second message frame, that receives the first message frame; and sending the second message frame by using the UL MCS.

According to an exemplary embodiment of the present disclosure, there is provided a communication apparatus. The communication apparatus may include: a processing module, configured to determine a first message frame, where the first message frame includes a station information field, the station information field includes a first sub-field, and the first sub-field is used for indicating a UL MCS used by a station device, in feeding back a second message frame, that receives the first message frame; and a transceiving module, configured to send the first message frame.

According to an exemplary embodiment of the present disclosure, there is provided a communication apparatus. The communication apparatus may include a transceiving module that is configured to: receive a first message frame, where the first message frame includes a station information field, the station information field includes a first sub-field, and the first sub-field is used for indicating a UL MCS used by a station device, in feeding back a second message frame, that receives the first message frame; and send the second message frame by using the UL MCS. The communication apparatus may also include a processing module that is configured to parse the first message frame.

According to an exemplary embodiment of the present disclosure, there is provided an electronic device. The electronic device includes a memory, a processor and a computer program stored on the memory and runnable on the processor. The processor, when executing the computer program, implements the method described above.

According to an exemplary embodiment of the present disclosure, there is provided a computer-readable storage medium. The computer-readable storage medium stores a computer program. The computer program, when executed by a processor, implements the method described above.

The technical solutions provided by the exemplary embodiments of the present disclosure define the resource (e.g., UL MCS) available to the STA, facilitating more accurate parsing by the AP.

### BRIEF DESCRIPTION OF THE DRAWINGS

The above and other features of the embodiments of the present disclosure will become more apparent by describing in detail the exemplary embodiments of the present disclosure with reference to the accompanying drawings, in the drawings:
FIG. 1 illustrates exemplary manners of WLAN sensing;
FIG. 2 is a flowchart illustrating a sensing measurement method according to exemplary embodiments;
FIG. 3 is a flowchart illustrating a sensing measurement method according to exemplary embodiments;
FIG. 4 is a flowchart illustrating a sensing measurement method according to exemplary embodiments;
FIG. 5 is a flowchart illustrating another sensing measurement method according to exemplary embodiments; and
FIG. 6 is a block diagram illustrating a communication apparatus according to exemplary embodiments.

### DETAILED DESCRIPTION

The following description with reference to the accompanying drawings is provided to assist in fully understanding of various embodiments of the present disclosure as defined by the appended claims and their equivalents. Various embodiments of the present disclosure include various specific details, but these specific details are considered exemplary only. In addition, descriptions of well-known techniques, functions and constructions may be omitted for the sake of clarity and brevity.

Terms and phrases used in the present disclosure are not limited to their written meanings, but are used only by the inventor to enable a clear and consistent understanding of the present disclosure. Accordingly, for those skilled in the art, the description of various embodiments of the present disclosure is provided for illustrative purposes only and is not intended for the purpose of limitations.

It should be understood that the singular forms "one", "a", "the", and "this" used herein may also include the plural form, unless the context clearly indicates otherwise. It should be further understood that the term "include" as used in the present disclosure refers to the presence of the described features, integers, steps, operations, elements, and/or components, but does not preclude the presence or addition of one or more other features, integers, steps, operations, elements, components, and/or groups thereof.

It will be understood that while the terms "first", "second", etc. may be used in this article to describe various elements, these elements should not be limited by these terms. These terms are only used to distinguish one element from another. Thus, without departing from the teaching of the exemplary embodiments, the first element discussed below may be referred to as the second element.

It should be understood that when an element is referred to as "connected" or "coupled" to another element, it may be directly connected or coupled to the another element, or there may be an intermediate element. In addition, "connect" or "couple" as used herein may include wireless connecting or wireless coupling. The term "and/or" or the expression "at least one/at least one of ......" as used herein includes any of and all of combinations of one or more of the relevant listed items.

Unless otherwise defined, all terms used herein, including technical and scientific terms, have the same meaning as generally understood by those ordinary skilled in the art to which the present disclosure belongs.

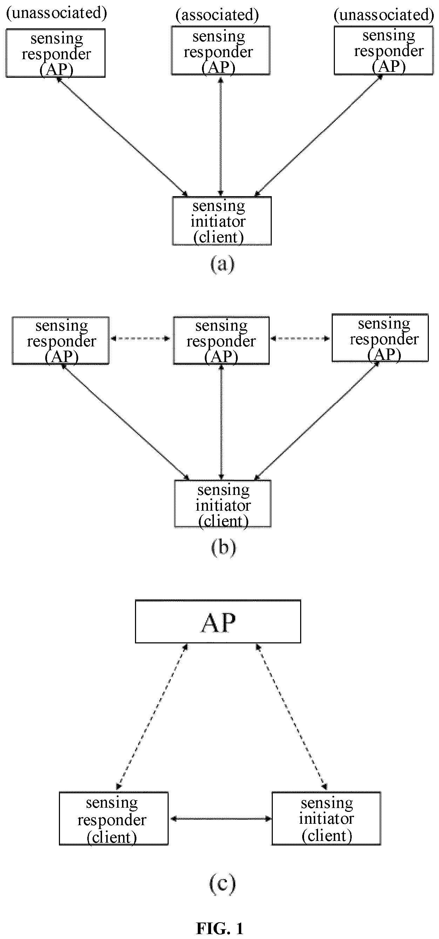

FIG. 1 illustrates exemplary manners of WLAN sensing.

The process of the WLAN sensing may be that an initiator initiates the WLAN sensing (e.g., initiates a WLAN sensing session), there may be a plurality of responders responding thereto, and specific possible manners may be illustrated in (a), (b) and (c) in FIG. 1.

Referring to (a) in FIG. 1, when the WLAN sensing initiator (e.g., a client) initiates the WLAN sensing, a plurality of associated or unassociated WLAN sensing responders, e.g., three access points (APs) may respond thereto. Here, "associated" may mean that an associated connection for communications is established between the initiator and the responder, and "unassociated" may mean that the associated connection for communications is not established between the initiator and the responder.

As an example, the client may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, or an Internet of Things (IoT) device, etc.

The AP may be a wireless switch for a wireless network, or may be an access device of the wireless network. The AP may include a software application and/or a circuit, thereby enabling other types of nodes in the wireless network to communicate via the AP with the outside and inside of the wireless network. As an example, the AP may be a terminal device or a network device equipped with a wireless fidelity (Wi-Fi) chip.

(b) in FIG. 1 is similar to (a) in FIG. 1, but in (b) of FIG. 1, communications may be performed between responders (APs).

Referring to (c) in FIG. 1, both the WLAN sensing initiator and the WLAN sensing responder may be clients, and the initiator and the responder may communicate through connecting to the same AP.

Although it is illustrated in (a), (b) and (c) in FIG. 1 that the client serves as the initiator and the AP serves as the responder, the present disclosure is not limited thereto. For example, in various embodiments of the present disclosure, the AP may serve as the initiator, and the client may serve as the responder. In addition, in various embodiments of the present disclosure, the client may be referred to as a non-AP station (Non-AP STA), abbreviated as "station (STA)". In addition, the number of the initiator and the number of the responder are not limited to those shown in (a), (b) and (c) of FIG. 1.

As an illustrative embodiment, the process of the WLAN sensing initiated by the initiator may include one or more of the following phases: a sensing session setup phase, a sensing measurement setup phase, a measurement phase, a reporting phase, and a termination phase.

In the sensing session setup phase, a sensing measurement session may be established, and an operation parameter associated with the sensing session may be determined and exchanged between devices. In the sensing measurement setup phase, the initiator and the responder may establish one or more sensing measurements, and each sensing measurement setup may be identified by using a measurement setup ID. A sensing measurement session may correspond to one or more sensing measurement setups. In the measurement phase, a sensing measurement event may be performed based on a sensing measurement frame. In the reporting phase, a sensing measurement result may be reported, e.g., channel state information (CSI). In the termination phase, the sensing measurement may be stopped and the sensing session may be terminated.

It will be understood that the process of the WLAN sensing described above is only exemplary, and some of the phases may be omitted, or some of the phases may be combined.

In addition, in the techniques of the WLAN sensing, there is a trigger-based (TB-based) sensing manner. For example, the TB-based sensing manner is based on a null data packet announcement (NDPA) frame and a trigger form of a trigger frame, where the AP may serve as the initiator, and the STA may serve as the responder.

In the application of the TB-based sensing manner, the AP may send a trigger (TF) frame to detect the presence of the STA and allocate a resource to the STA for sending an uplink clear-to-send-to-self (CTS-to-self) frame, and the uplink CTS-to-self frame (which may be referred to as "CTS-to-self frame" below for short) is a response to the TF frame sent by the AP. In addition, an NDPA sounding method may be used in the TB-based sensing manner. In this method, the AP needs to obtain a downlink sensing measurement result, may also send a trigger frame, and allocates a resource and the like to the STA for sending the downlink sensing measurement result (e.g., the STA may send the downlink sensing measurement result by sending an uplink sensing measurement report frame). In these processes, the AP needs to be capable of more accurately parsing the uplink sensing measurement report frame or the CTS-to-self sent by the STA as well as efficiently utilizing the resource, but there is a lack of a support mechanism in the existing signaling, which needs to be enhanced. For example, in these processes, the AP needs to specify the resource available to the STA (e.g., UL MCS, i.e., uplink MCS (modulation and coding scheme)) in the TF frame, however, there is no relevant definition in the existing signaling. Thus, a signaling enhancement is required.

In view of this, a sensing measurement method and a communication apparatus are provided according to the idea of the embodiments of the present disclosure.

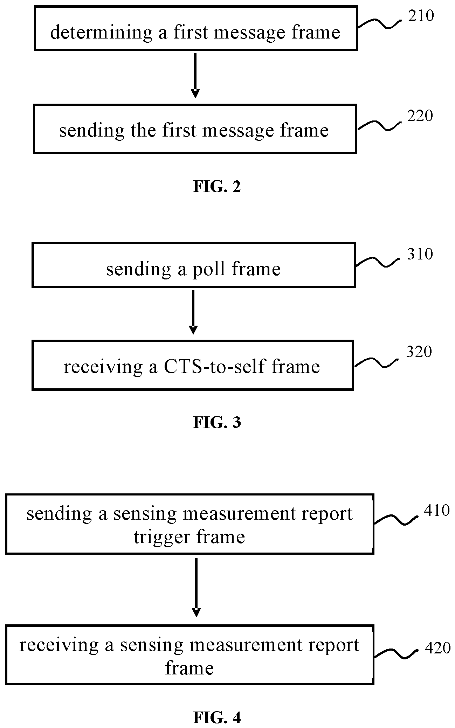

FIG. 2 is a flowchart illustrating a sensing measurement method according to exemplary embodiments. The sensing measurement method shown in FIG. 2 may be applied to an access point device (which may be referred to as an "access point" or an "AP" in this article).

Referring to FIG. 2, in step 210, a first message frame is determined, where the first message frame may include a station information (STA info) field, the station information field may include a first sub-field, and the first sub-field may be used for indicating a UL MCS used by a station device, in feeding back a second message frame, that receives the first message frame. In step 220, the first message frame may be sent.

According to the embodiments of the present disclosure, an index value of the UL MCS may be set in the first sub-field of the first message frame to indicate a transmission resource available to the station device that receives the first message frame for sending the second message frame. For example, the UL MCS identified by the index value may include various parameters corresponding to the transmission resource, for example, the number of spatial streams, the modulation manner, and the rate.

In the embodiments of the present disclosure, there may be various ways to determine the first message frame. For example, the first message frame may be generated or configured based on at least one of the following: a channel state, a network condition, a load condition, a hardware capability of a sending/receiving device, a service type, a relevant protocol provision. The embodiments of the present disclosure do not make specific limitations on this. In the embodiments of the present disclosure, the first message frame may also be obtained from an external device, and the embodiments of the present disclosure do not make specific limitations on this.

According to the embodiments of the present disclosure, the station information field may include a second sub-field, the second sub-field indicates an identifier of the station device that receives the first message frame, and the second sub-field corresponds to the first sub-field.

For example, the AP may send the first message frame to at least one STA, and the first message frame may include at least one station information field. Each station information field may include a UL MCS and an identifier of a station device. Specifically, the identifier of the station device may be identified by using an AID or a UID, where the AID may represent an identifier of a station that establishes an associated communication with the AP, and the UID represents an identifier of a station that does not establish the associated communication with the AP. For example, the station information fields in the first message frame may be as shown in Table 1 below.

**Table 1. station information field**

| | | | | |
|---|---|---|---|---|
| AID1/UID1 | UL MCS1 | AID2/UID2 | UL MCS2 | ...... |

In Table 1, AID1/UID1 and AID2/UID2, etc. may correspond to the identifiers of the station devices of the station information fields, and UL MCS1 and UL MCS2, etc. may correspond to the index values of the UL MCSs of the corresponding station devices. In other words, UL MCS1 may refer to an MCS resource available to a first station identified by AID1/UID1 for sending the second message frame; and UL MCS2 may refer to an MCS resource available to a second station identified by AID2/UID2 for sending the second message frame.

According to the embodiments of the present disclosure, the UL MCS of the first sub-field may be determined based on the quality of the channel (e.g., how good or poor the channel is) between the AP and the STA. For example, when the quality of the channel is good, the UL MCS that needs to have a low transmission efficiency may be allocated, e.g., when the quality of the channel is poor, the UL MCS that needs to have a high transmission efficiency may be allocated.

According to another embodiment of the present disclosure, the value (index value) of the UL MCS in each station information field may be the same or different. For example, the value of the UL MCS may be determined based on the information to be carried in the second message frame. Specifically, the values of the UL MCSs in the first message frame may be set to be the same when the information carried in the second message frame sent by the station devices is the same, and the values of the UL MCSs in the first message frame may be set to be different when the information carried in the second message frame sent by the station devices are different.

Although it is shown in Table 1 that each station information field may include both the UL MCS and the identifier of the station device, the present disclosure is not limited thereto. For example, but without limitations, the identifier (AID1/UID1, AID2/UID2, etc.) of the station device may be omitted in cases where only one station information field is included, or where the AP sends, according to a preset rule and criteria, the first message frame to the station devices respectively in a particular order.

The sensing measurement method according to the embodiments of the present disclosure defines the resource (e.g., UL MCS) available to the STA, facilitating more accurate parsing by the AP.

In the sensing measurement method applied to the access point device provided by the present disclosure, the access point device may determine and send the first message frame, where the first message frame may include an identifier (which may be referred to as a "type identifier" in this article for short) used for indicating a type of the first message frame. For example, the type identifier may indicate the type of the first message frame as a poll frame or a sensing measurement report trigger (TF) frame, however, the present disclosure is not limited thereto, and other types of frames that are applicable to the idea of the present disclosure are also feasible.

For example, a poll frame may refer to a trigger frame sent by an AP for detecting the presence of an STA. In the embodiments of the present disclosure, detecting the presence of the STA may refer to detecting an available state of an STA that participates in a WLAN sensing measurement, e.g., detecting whether the STA can participate in a WLAN sensing measurement.

For example, a sensing measurement report trigger frame may refer to a trigger frame sent by an AP for triggering an STA to feed back a sensing measurement result to the AP. For example, when an STA receives a sensing measurement report trigger frame from the AP, the STA may send a sensing measurement report frame to the AP, thereby sending the sensing measurement result of the STA to the AP.

According to the embodiments of the present disclosure, the type identifier may have one or more bits to indicate different types of the first message frame. For example, when the type identifier is set to a first value, it may indicate a poll frame, and when the type identifier is set to a second value different from the first value, it may indicate a sensing measurement report trigger frame. Such a manner may be referred to as indicating the type identifier explicitly, however, the present disclosure is not limited thereto, e.g., the identifier (which may be referred to as the "type identifier" below for short) used for indicating the type of the first message frame may be omitted, and the type of the first message frame may be determined in an implicit manner. For example, whether the first message frame is a poll frame or a sensing measurement report trigger frame may be implicitly determined based on the time for sending the first message frame. For example, when the AP sends the first message frame to check the presence of the STA during a poll phase before performing the sensing measurement, the first message frame may be implicitly determined as a poll frame; and when the AP sends the first message frame to obtain the sensing measurement result of the STA during a reporting phase after performing the sensing measurement, the first message frame may be implicitly determined as a sensing measurement report trigger frame.

FIG. 3 is a flowchart illustrating a sensing measurement method according to exemplary embodiments, and the sensing measurement method may be applied to an access point device (AP).

Referring to FIG. 3, in step 310, the AP may send a poll frame, and in step 320, the AP may receive a CTS-to-self frame.

In FIG. 3, the AP may send the poll frame to an STA to detect the presence (availability state) of the station, and the STA that receives the poll frame may send the CTS-to-self frame to the AP by using a resource (e.g., a UL MCS) allocated to the STA in the poll frame. When the AP receives the CTS-to-self frame from the STA, it indicates that the STA exists, i.e., the STA is available for the WLAN sensing measurement.

In other words, in FIG. 3, when the first message frame is a poll frame, the second message frame may be a CTS-to-self frame, and in this embodiment, the UL MCSs in the first message frame may be set to be the same. This is because, when the first message frame is the poll frame used for checking the presence of the STA, the frames fed back by the STAs are all CTS-to-self frames, and CTS-to-self frames generally have the same content and size. Therefore, the value of the UL MCS in the first sub-field in each station information field may be set to be the same.

FIG. 4 is a flowchart illustrating a sensing measurement method according to exemplary embodiments, and the sensing measurement method may be applied to an AP.

Referring to FIG. 4, in step 410, the AP may send a sensing measurement report trigger frame, and in step 420, the AP may receive a sensing measurement report frame.

In FIG. 4, the AP may send the sensing measurement report trigger frame to an STA, and the STA that receives the sensing measurement report trigger frame may send the sensing measurement report frame to the AP by using a resource (e.g., a UL MCS) allocated to the STA in the sensing measurement report trigger frame, and may carry the sensing measurement result in the sensing measurement report frame.

In other words, in FIG. 4, when the first message frame is a sensing measurement report trigger frame, the second message frame is a sensing measurement report frame. According to the embodiments of the present disclosure, the value of the UL MCS in the first message frame may be determined based on the information carried in the sensing measurement report frame. For example, when the first message frame is the sensing measurement report trigger frame used for obtaining a sensing measurement result, if the sensing measurement results fed back by the STAs include the same information (i.e., the sizes of the sensing measurement report frames transmitted by the STAs are the same), the values of the UL MCSs in the first message frame may be set to be the same; conversely, if the sensing measurement results fed back by the STAs include different information (i.e., the sizes of the sensing measurement report frames transmitted by the STAs are different), the values of the UL MCSs in the first message frame may be set to be different.

Additionally, in an optional embodiment, when the values of the UL MCSs in the first message frame are set to be different, each station information field may further include a padding sub-field, and the padding sub-field indicates a padding value that needs to be used by each station device. Including the padding value in the station information field for use by the corresponding station device to send the sensing measurement report frame can ensure that the STAs send the sensing measurement report frames with a consistent duration, and ensure the smooth transmission of the signaling.

In conjunction with the foregoing embodiments of FIGS. 3 to 4, the UL MCS (e.g., the index value of the UL MCS) of the first sub-field in the first message frame may be determined or set based on the type of the first message frame (a poll frame or a sensing measurement report trigger frame). However, the present disclosure is not limited to this. The UL MCS of the first sub-field may be determined based on the quality of the channel (e.g., how good or poor the channel is) between the AP and the STA, which has been described in the preceding embodiments, and the repetitive descriptions are omitted herein.

In the sensing measurement method applied to the access point device provided by the present disclosure, the first message frame may further include a sensing measurement setup identifier (measurement setup ID) that is used for indicating a station device triggered to participate in a sensing measurement process corresponding to the sensing measurement setup identifier. For example, the first message frame may include a station information field, feasible embodiments of which may be shown in Table 2 below.

**Table 2. station information field**

| | | | | | | |
|---|---|---|---|---|---|---|
| measurement setup ID 1 | AID1/ UID1 | UL MCS1 | measurement setup ID 2 | AID2/ UID2 | UL MCS2 | ...... |

In Table 2, "measurement setup ID 1, AID1/UID1, UL MCS1" may represent that, during a sensing measurement process corresponding to a sensing measurement setup identifier (measurement setup ID 1), the station device identified by AID1/UID1 uses UL MCS1 to send the second message frame; and "measurement setup ID2, AID2/UID2, UL MCS2" may be similarly represented, and the repetitive descriptions are omitted for brevity.

It will be understood that although it is shown in Table 2 that each station information field may include a first sub-field (UL MCS), a second sub-field (AID/UID), and a sensing measurement setup identifier (measurement setup), the present disclosure is not limited to this, and some of the information therein may, for example, be omitted. For example, each station information field may include only the first sub-field (UL MCS). Additionally, although it is shown in Table 2 that, each station information field may include a first sub-field (UL MCS), a second sub-field (AID/UID), and a sensing measurement setup identifier (measurement setup), the present disclosure is not limited to this. For example, in a sensing measurement process corresponding to a sensing measurement setup identifier in a station information field, if a plurality of stations participates in the sensing measurement, a plurality of AIDs/UIDs and their respective corresponding UL MCSs may be included in the station information field. In addition, although it is shown in Table 2 that, the sensing measurement setup identifier is included in the station information field, the present disclosure is not limited thereto, for example, the sensing measurement setup identifier may not be included in the station information field, but may be a separate field.

According to the embodiments of the present disclosure, the station information field may be included in the TF frame, where the station information field may include a UL MCS sub-field for indicating that the STA sends the CTS-to-self frame or the sensing measurement report frame after receiving the TF frame. The station information field may include an STA identification that may be identified as AID (associated) or UID (unassociated). For example, the station information field may appear at least once in the TF frame, where the value of each UL MCS sub-field in each station information field may be set to be different, depending on how good the channel between the AP and the STA is.

According to the embodiments of the present disclosure, the type of the TF frame may be a poll frame or a sensing measurement report trigger frame, and needs to be differentiated by identification bits. For a polling frame that detects the presence of the STA, the UL MCS in each station information field is the same, due to the fact that it is used for transmitting the CTS-to-self. For a sensing measurement report trigger frame, the UL MCS in each station information field may be set to be different, due to the fact that the sizes of the transmitted sensing measurement report frames may be different, in which case it may be required to add to each station information field a padding sub-field that indicates a padding value to be used by each STA.

According to the embodiments of the present disclosure, the poll frame or the sensing measurement report trigger frame may include a sensing measurement setup identifier (measurement setup ID) that indicates an STA triggered to participate in the measurement setup ID.

According to the embodiments of the present disclosure, the poll frame may be used for an uplink sensing measurement (UL sounding sensing measurement) and a downlink sensing measurement (DL sounding sensing measurement), but the sensing measurement report trigger frame is only used for the downlink sensing measurement. The uplink sensing measurement may refer to that an AP performs a sensing measurement by using a sensing measurement frame (e.g., a null data packet (NDP) frame), and the downlink sensing measurement may refer to that an STA performs a sensing measurement by using a sensing measurement frame (e.g., an NDP frame).

The sensing measurement method according to the embodiments of the present disclosure defines the resource (e.g., UL MCS) available to the STA, facilitating more accurate parsing by the AP.

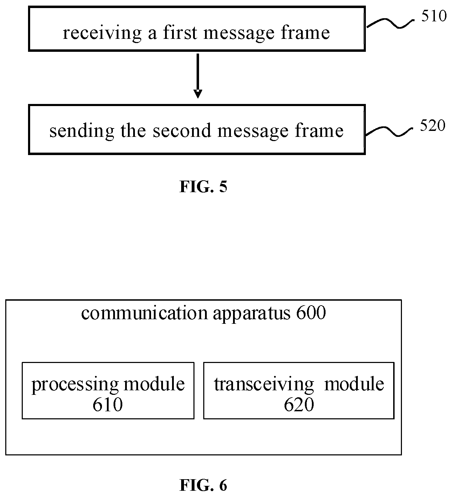

FIG. 5 is a flowchart illustrating another sensing measurement method according to exemplary embodiments. The sensing measurement method shown in FIG. 5 may be applied to a station device (which may be referred to as a "station" or an "STA" in this article).

Referring to FIG. 5, in step 510, a first message frame is received, where the first message frame includes a station information field, the station information field includes a first sub-field, and the first sub-field is used for indicating a UL MCS used by a station device, in feeding back a second message frame, that receives the first message frame; and in step 520, the second message frame is sent by using the UL MCS.

According to the embodiments of the present disclosure, the station information field may further include a second sub-field used for indicating an identifier of the station device, and the second sub-field corresponds to the first sub-field.

According to the embodiments of the present disclosure, the first message frame may include at least one station information field. For example, the value of the UL MCS of the first sub-field in each station information field may be determined based on the information carried in the second message frame.

According to the embodiments of the present disclosure, the first message frame may further include an identifier used for indicating a type of the first message frame, where the identifier may indicate the first message frame as a poll frame or a sensing measurement report trigger frame.

According to the embodiments of the present disclosure, when the first message frame is a poll frame, the second message frame is a CTS-to-self frame, and the UL MCS of the first sub-field in each station information field is set to be the same.

According to the embodiments of the present disclosure, when the first message frame is a sensing measurement report trigger frame, the second message frame is a sensing measurement report frame. For example, the UL MCS of the first sub-field in each station information field may be determined based on the information carried in the sensing measurement report frame.

According to the embodiments of the present disclosure, each station information field may further include a padding sub-field used for indicating a padding value that needs to be used by each station device.

According to the embodiments of the present disclosure, the first message frame may further include a sensing measurement setup identifier used for indicating a station device triggered to participate in a sensing measurement process corresponding to the sensing measurement setup identifier.

The descriptions of the first message frame, the second message frame, the first sub-field (UL MCS), the second sub-field (AID/UIS), the padding sub-field, the sensing measurement setup identifier, the poll frame, the CTS-to-self frame, etc. may be similar to the descriptions described above with reference to FIGS. 2 to 4, and Tables 1 and 2, and the repetitive descriptions are omitted herein for brevity.

The information included in the first message frame described above with reference to various embodiments is only exemplary, and the present disclosure is not limited thereto. Various deformations may be made to the embodiments.

For example, although not illustrated in the figures, an embodiment of the present disclosure may provide a sensing measurement method. The method may be applied to a station and may include receiving a first message frame, where the first message frame includes a type identifier, and the type identifier may indicate a type of the first message frame. For example, the type identifier may indicate the first message frame as a poll frame or a sensing measurement report trigger frame. The preceding text has provided detailed descriptions with reference to various embodiments, and the repetitive descriptions are omitted herein to avoid redundancy.

For example, although not illustrated in the figures, an embodiment of the present disclosure may provide a sensing measurement method. The method may be applied to a station and may include receiving a poll frame and sending a CTS-to-self frame, where the poll frame includes a UL MCS used in feeding back the CTS-to-self frame. For example, the poll frame may include at least one UL MCS, and the UL MCSs in the first sub-fields may be set to be the same. The preceding text has provided detailed descriptions with reference to various embodiments, and the repetitive descriptions are omitted herein to avoid redundancy.

For example, although not illustrated in the figures, an embodiment of the present disclosure may provide a sensing measurement method. The method may be applied to a station and may include receiving a poll frame and sending a CTS-to-self frame, where the poll frame includes a UL MCS used in feeding back a CTS-to-self frame, and an identifier used for indicating a station device, and they may correspond to each other. The preceding text has provided detailed descriptions with reference to various embodiments (e.g., Table 1), and the repetitive descriptions are omitted herein to avoid redundancy.

For example, although not illustrated in the figures, an embodiment of the present disclosure may provide a sensing measurement method. The method may be applied to a station and may include receiving a poll frame and sending a CTS-to-self frame, where the poll frame includes a UL MCS used in feeding back the CTS-to-self frame, an identifier of a station device, and a sensing measurement setup identifier. The preceding text has provided detailed descriptions with reference to various embodiments (e.g., Table 2), and the repetitive descriptions are omitted herein to avoid redundancy.

For example, although not illustrated in the figures, an embodiment of the present disclosure may provide a sensing measurement method. The method may be applied to a station and may include receiving a sensing measurement report trigger frame and sending a sensing measurement report frame, where the sensing measurement report trigger frame includes a UL MCS used in sending the sensing measurement report frame. For example, the UL MCSs may be set to be the same or different based on the information carried in the sensing measurement report frames. For example, when the UL MCSs are set to be different, the sensing measurement report trigger frame may further include a padding sub-field used for indicating a padding value that needs to be used by each station device. For example, a station device may generate the sensing measurement report frame by using the padding value, and send the sensing measurement report frame by using the UL MCS.

For example, although not illustrated in the figures, an embodiment of the present disclosure may provide a sensing measurement method. The method may be applied to a station and may include receiving a sensing measurement report trigger frame and sending a sensing measurement report frame, where the sensing measurement report trigger frame includes a UL MCS used in sending the sensing measurement report frame, and an identifier of the station device. The preceding text has provided detailed descriptions with reference to various embodiments, and the repetitive descriptions are omitted herein to avoid redundancy.

For example, although not illustrated in the figures, an embodiment of the present disclosure may provide a sensing measurement method. The method may be applied to a station and may include receiving a sensing measurement report trigger frame and sending a sensing measurement report frame, where the sensing measurement report trigger frame includes a UL MCS used in sending the sensing measurement report frame, an identifier of a station device, and a sensing measurement setup identifier. The sensing measurement setup identifier is used for indicating a station device triggered to participate in a sensing measurement process corresponding to the sensing measurement setup identifier. The preceding text has provided detailed descriptions with reference to various embodiments, and the repetitive descriptions are omitted herein to avoid redundancy.

FIG. 6 is a block diagram illustrating a communication apparatus according to exemplary embodiments. The communication apparatus 600 in FIG. 6 may include a processing module 610 and a transceiving module 620. In an embodiment of the present disclosure, the communication apparatus 600 shown in FIG. 6 may be applied to an access point device. In another embodiment of the present disclosure, the communication apparatus 600 shown in FIG. 6 may be applied to a station device.

In the case where the communication apparatus 600 shown in FIG. 6 may be applied to an access point device, the processing module 610 may be configured to determine a first message frame, where the first message frame includes a station information field, the station information field includes a first sub-field, and the first sub-field is used for indicating a UL MCS used by a station device, in feeding back a second message frame, that receives the first message frame. The transceiving module 620 may be configured to send the first message frame. That is, the communication apparatus 600 shown in FIG. 6 may perform the sensing measurement method described with reference to FIGS. 2 to 4, the embodiments described with reference to Tables 1 and 2 may be applied thereto, and the repetitive descriptions are omitted herein to avoid redundancy.

In the case where the communication apparatus 600 shown in FIG. 6 may be applied to a station device, the transceiving module 620 may be configured to receive a first message frame, where the first message frame includes a station information field, the station information field includes a first sub-field, and the first sub-field is used for indicating a UL MCS used by a station device, in feeding back a second message frame, that receives the first message frame. The processing module 610 may be configured to send the second message frame by using the UL MCS. That is, the communication apparatus 600 shown in FIG. 6 may perform the sensing measurement method described with reference to FIG. 5 and various deformed embodiments, the embodiments described with reference to Tables 1 and 2 may be applied thereto, and the repetitive descriptions are omitted herein to avoid redundancy.

It will be understood that the communication apparatus 600 shown in FIG. 6 is only exemplary, and the embodiments of the present disclosure are not limited thereto, e.g., the communication apparatus 600 may include other modules, for example, a memory module, etc. Furthermore, modules in the communication apparatus 600 may be combined into a more complex module or may be divided into more separate modules.

The sensing measurement method and the communication apparatus according to the embodiments of the present disclosure define the resource (e.g., UL MCS) available to the STA, facilitating more accurate parsing by the AP.

Based on the same principle as the method provided in the embodiments of the present disclosure, the embodiments of the present disclosure also provide a communication device including a processor and a memory; where the memory stores a machine-readable instruction (which may also be referred to as a "computer program"); and the processor is configured to execute the machine-readable instruction to implement the method described with reference to FIGS. 2 to 5.

The embodiments of the present disclosure also provide a computer-readable storage medium, where the computer-readable storage medium stores a computer program, and the computer program, when executed by a processor, causes the method described with reference to FIGS. 2 to 5 to be implemented.

In an exemplary embodiment, the processor may be used for implementing or executing various exemplary logic blocks, modules and circuits described in conjunction with the content in the present disclosure, for example, the processor may be a central processing unit (CPU), a general purpose processor, a digital signal processor (DSP), an application specific integrated circuit (ASIC), a field programmable gate array (FPGA), or other programmable logic devices, transistor logic devices, hardware components, or any combination thereof. The processor may also be a combination that implements computing functions, such as a combination including one or more microprocessors, or a combination of a DSP and a microprocessor, etc.

In an exemplary embodiment, the memory may be, for example, a read only memory (ROM), a random access memory (RAM), an electrically erasable programmable read only memory (EEPROM), a compact disc read only memory (CD-ROM), or other compact disc storage, optical disc storage (including compressed optical discs, laser discs, optical discs, digital versatile discs, Blu-ray discs, etc.), disk storage medium or other magnetic storage device, or any other medium capable of being used to carry or store program code in the form of instructions or data structures and capable of being accessed by a computer, but not limited to this.

It should be understood that although various steps in the flowchart of the accompanying drawings are shown in sequence as indicated by arrows, these steps are not necessarily performed in the order indicated by the arrows. Unless explicitly stated in this article, the execution of these steps is not strictly limited in order, and they can be executed in other orders. Moreover, at least a portion of the steps in the flowchart of the accompanying drawings may include multiple sub-steps or multiple stages. These sub-steps or stages are not necessarily executed at the same time, but may be executed at different times. The execution order of these sub-steps or stages is also not necessarily sequential, and these sub-steps or stages may be performed in turn or alternately with other steps, sub-steps of other steps, or at least a portion of the stages.

Although the present disclosure has been shown and described with reference to certain embodiments of the present disclosure, those skilled in the art will understand that various changes in form and details may be made without departing from the scope of the present disclosure. Accordingly, the scope of the present disclosure should not be limited to the embodiments, but should be defined by the appended claims and their equivalents.

## Claims

1. A sensing measurement method, applied to an access point device, comprising:
determining a first message frame, wherein the first message frame comprises a station information field, the station information field comprises a first sub-field, and the first sub-field is used for indicating an uplink modulation and coding scheme (UL MCS) used by a station device, in feeding back a second message frame, that receives the first message frame; and
sending the first message frame.

2. The sensing measurement method according to claim 1, wherein the station information field further comprises a second sub-field used for indicating an identifier of the station device; and
the second sub-field corresponds to the first sub-field.

3. The sensing measurement method according to claim 2, wherein the first message frame comprises at least one station information field.

4. The sensing measurement method according to any one of claims 1 to 3, wherein the first message frame further comprises an identifier used for indicating a type of the first message frame, and the identifier indicates the first message frame as a poll frame or a sensing measurement report trigger frame.

5. The sensing measurement method according to claim 1, wherein when the first message frame is a poll frame, the second message frame is a CTS-to-self frame, and the UL MCS of the first sub-field in each station information field is set to be the same.

6. The sensing measurement method according to claim 1, wherein when the first message frame is a sensing measurement report trigger frame, the second message frame is a sensing measurement report frame.

7. The sensing measurement method according to claim 6, wherein each station information field further comprises a padding sub-field used for indicating a padding value to be used by each station device.

8. The sensing measurement method according to claim 1, wherein the first message frame further comprises a sensing measurement setup identifier used for indicating a station device triggered to participate in a sensing measurement process corresponding to the sensing measurement setup identifier.

9. A sensing measurement method, applied to a station device, comprising:
receiving a first message frame, wherein the first message frame comprises a station information field, the station information field comprises a first sub-field, and the first sub-field is used for indicating an uplink modulation and coding scheme (UL MCS) used by a station device, in feeding back a second message frame, that receives the first message frame; and
sending the second message frame by using the UL MCS.

10. The sensing measurement method according to claim 9, wherein the station information field further comprises a second sub-field used for indicating an identifier of the station device; and
the second sub-field corresponds to the first sub-field.

11. The sensing measurement method according to claim 10, wherein the first message frame comprises at least one station information field.

12. The sensing measurement method according to any one of claims 9 to 11, wherein the first message frame further comprises an identifier used for indicating a type of the first message frame, and the identifier indicates the first message frame as a poll frame or a sensing measurement report trigger frame.

13. The sensing measurement method according to claim 12, wherein when the first message frame is the poll frame, the second message frame is a CTS-to-self frame, and the UL MCS of the first sub-field in each station information field is set to be the same.

14. The sensing measurement method according to claim 12, wherein when the first message frame is the sensing measurement report trigger frame, the second message frame is a sensing measurement report frame.

15. The sensing measurement method according to claim 14, wherein each station information field further comprises a padding sub-field used for indicating a padding value to be used by each station device.

16. The sensing measurement method according to claim 9, wherein the first message frame further comprises a sensing measurement setup identifier used for indicating a station device triggered to participate in a sensing measurement process corresponding to the sensing measurement setup identifier.

17. A communication apparatus, comprising:
a processing module, configured to determine a first message frame, wherein the first message frame comprises a station information field, the station information field comprises a first sub-field, and the first sub-field is used for indicating an uplink modulation and coding scheme (UL MCS) used by a station device, in feeding back a second message frame, that receives the first message frame; and
a transceiving module, configured to send the first message frame.

18. A communication apparatus, comprising:
a transceiving module, configured to: receive a first message frame, wherein the first message frame comprises a station information field, the station information field comprises a first sub-field, and the first sub-field is used for indicating an uplink modulation and coding scheme (UL MCS) used by a station device, in feeding back a second message frame, that receives the first message frame; and send the second message frame by using the UL MCS; and
a processing module, configured to parse the first message frame.

19. An electronic device, comprising a memory, a processor and a computer program stored on the memory and runnable on the processor, wherein the processor, when executing the computer program, implements the method according to any one of claims 1 to 8 or any one of claims 9 to 16.

20. A computer-readable storage medium, wherein the computer-readable storage medium stores a computer program that, when executed by a processor, implements the method according to any one of claims 1 to 8 or any one of claims 9 to 16.
